# EUROPEAN PATENT APPLICATION

(11) **EP 2 550 868 A1**
(43) Date of publication of application: **30.01.2013**
(21) Application number: 10848282.9
(22) Date of filing: 08.06.2010
(51) Int. Cl.: A23B 7/16

(54) **METHOD FOR PRESERVING FRUIT, VEGETABLES AND THE LIKE**

(30) Priority: 24.03.2010 ES 201030428
(71) Applicant: Desarrollos Sanitarios Hortofrutícolas 2121, S.L., 50430 Maria De Huerva (Zaragoza) (ES)
(72) Inventor: GONZALEZ VALENCIA, Juan, 46901 Valencia (ES); ARANDA CAMPIN, David, 50420 Zaragoza (ES)
(74) Representative: Schäfer, Matthias W.
(86) International application number: PCT/ES2010/070381
(87) International publication number: WO 2011/117432

(57) **Abstract**

The method consists of selecting individual fruit or vegetables without bruises or broken skin, cleaning them with an air jet, washing them in sterile water and drying them at a temperature between 18°C and 25°C such that, once the fruit or vegetable is clean, it is inserted into a food-grade composite bath to obtain a protective covering consisting of a thin layer of continuous tangible material that protects both the skin and the stem and crown of the fruit or vegetable, the fruit thus being protected until consumption, without refrigeration and without rotting since the oxygen necessary for bacteria growth is absent. The fruit or vegetable can be consumed after removing the food-grade composite by cutting away said covering.

## Description

### OBJECT OF THE INVENTION

The invention relates to a method for preserving fruit, vegetables and the like, the obvious purpose of which is to prevent bacteria growth in fruit and vegetables and thus preserve them in an optimum state for consumption.

The object of the invention is to preserve fruit and vegetables without their undergoing oxidation, ensuring that they fully maintain all of their characteristics and properties over a period of time, from harvesting until consumption.

### BACKGROUND TO THE INVENTION

As is known, fruit and vegetables are preserved by refrigeration, that is, by placing them or maintaining them for periods of time in cold stores which prevent the growth of bacteria while the fruit and vegetables are kept in said cold stores.

However, as soon as fruit is taken out of a cold store, it quickly matures and if it is not consumed rapidly it rots in a short space of time.

Furthermore, preserving fruit and vegetables in cold stores requires a considerable economic investment for the acquisition of the cold stores and also involves high energy consumption and the fruit and vegetables are unprotected once they are taken out of the cold store until consumption.

### DESCRIPTION OF THE INVENTION

The method for preserving fruit and vegetables that is recommended has been designed to solve the previously described problems and is based on a simple but highly effective solution.

More precisely, the method of the invention comprises an initial pre-protection stage and a second stage of actual protection, such that in the pre-protection stage individual fruit without bruises or broken skin is selected; it is checked that it does have plant material such as flowers, small leaves, twigs, etc., and in this phase the fruit must also be free of any chemical product on its surface, any dust or soil.

After the selection of the fruit, the pre-protection stage ends with the fruit being cleaned with an air jet, washed with sterile water and dried with a stream of air at a set temperature of between 18°C and 25°C, until any dampness remaining on the surface of the product after washing has been completely removed.

The protection stage as such consists of inserting the fruit or vegetable to be preserved in a food-grade composite bath to obtain the total covering of the fruit or vegetable to be protected and preserved, with the particularity that the coated fruit or vegetable is transferred on comb rollers to a vulcanization chamber where, at a temperature of 45° and for a brief time, the layer of this product applied to the fruit or vegetable, is consolidated to obtain a thin covering of continuous tangible material, which envelops and protects the skin, stem and crown of the fruit or vegetable.

When the fruit or vegetable is going to be consumed all that has to be done is to simply cut away the protective food-grade composite covering and tear off this layer of material or protective product since the food-grade composite is a disposable and recyclable product which does not harm the environment and it is recommended that it is disposed of in the plastics waste bin.

Even in the event of ingesting the food-grade composite which is the covering material of the fruit to be protected and preserved, there would be no consequences for the person consuming it, since it is a harmless product or material.

Based on the described method, any fruit or vegetables to which the method is applied will also be preserved over long periods of time without undergoing any oxidation and will fully maintain, for a long time, the product's characteristics, colour, aroma, taste and turgidity, also maintaining its nutritional properties, proteins, vitamins, carbohydrates, salts, etc.

Furthermore, the method referred to prolongs the length of time that the fruit or vegetable is preserved, minimizing waste due to deterioration and allowing a protection that enables the fruit or vegetable to be consumed directly without washing it and by just removing the protective composite covering which, with its application, avoids both ultraviolet rays as well as dust, hand contact and the attack of harmful viruses and bacteria.

Finally, it can be said that with this invention method, the protection of the fruit and vegetable is ensured from its origin until consumption, thereby protecting the whole of the traceability of the fruit or vegetable in question.

## Claims

1. Method for preserving fruit, vegetables and the like, envisaged to prevent oxidation and thus the rotting of fruit and/or vegetables during the traceability of the same, without the need for cold stores and **characterized in that** it consists of:
- Selecting the fruit or vegetable to be preserved, without bruises or broken skin.
- Cleaning the selected fruit by means of air jet and then washing it with sterile water.
- Drying the fruit or vegetable in question with a stream of air at a temperature of between 18°C and 25°C.
- Inserting the fruit or vegetable in a food-grade composite bath to obtain the covering of the fruit or vegetable with said product.
- Placing the fruit or vegetable covered with the food-grade composite product in a vulcanization chamber at a temperature of 45°C for a brief period of time to consolidate the protective covering on the external surface of the fruit or vegetable, allowing its commercialization up to the time of consumption.

2. Method for preserving fruit, vegetables and the like, according to claim 1, **characterized in that** the protective food-grade composite covering, applied to the fruit or vegetable with a bath, is removed by cutting it and is disposed of before consuming the fruit or vegetable.

3. Method for preserving fruit, vegetables and the like, according to claim 1, **characterized in that** the protective food-grade composite covering constitutes a thin layer of continuous tangible material that protects the whole of the external surface or skin of the fruit or vegetable as well as its stem and crown.
